# EUROPEAN PATENT SPECIFICATION

(11) **EP 3 502 681 B1**
(45) Date of publication and mention of the grant of the patent: **14.02.2024**
(21) Application number: 17209212.4
(22) Date of filing: 21.12.2017
(51) Int. Cl.: G01N 27/414, H01L 29/66

(54) **PROTECTING A SUBSTRATE REGION DURING FABRICATION OF A FET SENSOR**
SCHÜTZEN EINES SUBSTRATBEREICHS WÄHREND DER HERSTELLUNG EINES FET-SENSORS
PROTECTION D'UNE RÉGION DE SUBSTRAT PENDANT LA FABRICATION D'UN CAPTEUR À EFFET DE CHAMP

(43) Date of publication of application: 26.06.2019
(73) Proprietor: IMEC vzw, 3001 Leuven (BE)
(72) Inventor: MARTENS, Koen, 3001 Leuven (BE); COLLAERT, Nadine, 3001 Leuven (BE); KUNNEN, Eddy, Leuven 3001 (BE); SEVERI, Simone, 3001 Leuven (BE)
(74) Representative: Winger

(56) References cited:
- US-A1- 2005 051 854
- US-A1- 2017 114 402
- US-B1- 8 679 885
- US-B1- 8 728 844
- US-B1- 9 140 662
- BENDRIAA F ET AL: "Study of mechanical stability of suspended bridge devices used as pH sensors", JOURNAL OF NON-CRYSTALLINE SOLIDS, NORTH-HOLLAND PHYSICS PUBLISHING. AMSTERDAM, NL, vol. 352, no. 9, 18 April 2006 (2006-04-18), pages 1246-1249, XP029614645, ISSN: 0022-3093, DOI: 10.1016/J.JNONCRYSOL.2005.09.055

## Description

### Technical field of the invention

The present invention relates to the field of field-effect transistor sensors, and more particularly to a fabrication method thereof wherein a substrate region must be protected, for instance, due to the presence of a gate dielectric thereon and optionally a nanocavity therein.

### Background of the invention

Chemical and/or biological field-effect transistor sensors (FET sensors) with dimensions in the nano-regime typically need to be exposed to an analyte solution (e.g. an electrolyte) so as to enable sensing. In order to protect the sensor FET's gate dielectric during processing, it is often covered by an insulating material. A cavity must, therefore, be etched at the end of the manufacturing process to expose the gate dielectric of the FET and allow exposure to the electrolyte. This is a delicate step to perform as making such a cavity at the end of the process typically requires etching down several hundreds of nanometers or even micrometers deep while stopping on the gate dielectric, which is typically only a few nanometres thick. Additionally, achieving the desired overlay accuracy of said deep etching with respect to the gate dielectric at the end of the manufacturing process is a non-trivial challenge to overcome. It is practically impossible to meet these requirements with good reproducibility under current manufacturing conditions.

One way to address some of these issues is disclosed in US20140073039 A1. A method is disclosed comprising forming a plurality of FETs on a semiconductor substrate, wherein a subset of the FETs is for forming biological FETs (BioFETs); forming a poly-silicon sacrificial plug over a portion of the gate electrode for the BioFETs; forming contacts on the FETs; forming a multi-layer interconnect (MLI) over the FETs; etching the MLI to expose at least a portion of the sacrificial plug, thereby forming a portion of a micro well; and removing the sacrificial plug (and optionally the gate electrode) using a non-plasma etch, thereby forming a second well portion of the micro well. The non-plasma etch uses gaseous xenon fluoride (XeF₂) as an etchant, or the non-plasma etch is a wet etch based on potassium hydroxide (KOH), tetramethylammonium hydroxide (TMAH) or a hydrofluoric acid/nitric acid/acetic acid mixture (HNA) as etchants. After removal of the sacrificial plug, a partially fabricated BioFET is obtained. Further steps may involve replacement of the gate dielectric in the BioFETs (typically SiO₂) by a biologically compatible high k dielectric (e.g. Si₃N₄, Al₂O₃, HfO₂, TiO₂ or Ta₂O₅). Additional steps may also include coating a sidewall and/or a bottom of the microwell with a first and/or second coating, respectively.

However, several issues remain with this approach. For example, because the BioFETs in US20140073039 A1 are typically still only partially fabricated, the delicate sensor parts (e.g. gate dielectric) are still prone to be damaged during the multiple process steps that follow the removal of the sacrificial plug. Furthermore, the proposed non-plasma etches (e.g. TMAH based) will not only etch poly-silicon, but also other materials such as Al, Al₂O₃, Ti, and TiₓO_{y}. However, it is common for FET sensors to comprise exposed surfaces of these materials, such as Al bond pads and/or Al₂O₃ passivation and anti-fouling layers. The disclosed method thus requires the sacrificial plug to be removed before exposing these materials, yet further increasing the number of processing steps that may still damage the delicate sensor parts (e.g. gate dielectric).

US 2017/114402 A1 discloses a semiconductor structure for DNA sequencing detection. Similarly, the fabrication of this structure involves the formation of a sacrificial gate cut portion which is later removed by either wet-etch (for example TMAH, KOH, or NH₄OH) or dry etch.

US 8,679,885 B1 discloses a method for forming a semiconductor structure for sensing biomolecules. Similarly, the method involves the formation of a sacrificial gate material which is later removed with an etching process making use of ammonia or a chemical dry etch.

Bendriaa F. et al. ('Study of mechanical stability of suspended bridge devices used as pH sensors', journal of non-crystalline solids, vol. 352, no. 9, 18 April 2006, pages 1246-1249) discloses the formation of a suspended bridge devices involving the formation and the subsequent removal of a sacrificial gate with hydrogen peroxide warmed at 90°C.

There is thus still a need in the art for methods and structures which overcome some or all of the issues outlined above.

### Summary of the invention

It is an object of the present invention to provide good methods for making FET sensors. The above objective is accomplished by a kit-of-parts, and a method according to the present invention and as defined by the independent claims.

It is an advantage of embodiments of the present invention that the substrate region of the intermediate (e.g. with the gate dielectric thereon, and optional nanocavity therein) can be well protected during manufacture of the field-effect transistor sensor, but can be easily uncovered later in the fabrication process, e.g. at the very last step thereof. It is a further advantage of embodiments of the present invention that the substrate region can remain protected substantially throughout the fabrication process and optionally during transport, being uncovered only shortly before use of the field-effect transistor sensor. It is yet a further advantage of embodiments of the present invention that uncovering the substrate region can be performed by the end-user, using relatively safe and inexpensive chemicals and without requiring the end-user to be highly trained.

It is an advantage of embodiments of the present invention that, even though a relatively thick stack of layers overlays the substrate region, a sensory cavity exposing the gate dielectric on the substrate region and having critical dimensions too small, and a placement (usually referred to as overlay accuracy) too precise, to be obtained with typical back end of line processing methods, can be formed.

It is a further advantage of embodiments of the present invention that the layers overlying the substrate region can be opened down to the sacrificial element using a cruder and/or more aggressive etching technique (e.g. a dry etch), while a finer and/or more selective oxidative technique (e.g. a wet etch) can be used for finally removing the sacrificial element. It is a further advantage of embodiments of the present invention that the overlay requirements for etching down to the sacrificial element may be reduced when compared with the typical situation of the prior art where the formation of a sensory cavity is attempted by directly etching it through the thick stack of layers overlying the gate dielectric, without making use of the present invention. It is yet a further advantage of embodiments of the present invention that the sacrificial element can act as an etch stop layer for the earlier etching.

It is an advantage of embodiments of the present invention that the sensor cavity which is left after removing the sacrificial element can remain in a wet state. This advantage holds when the oxidative removal is performed with a liquid such as a peroxide solution.

It is an advantage of embodiments of the present invention that the sacrificial element can be removed selectively with respect to other exposed materials which are commonly present in FET sensors, e.g. after back of line processing of FET sensors. In particular, embodiments of the present invention are compatible with causing low or no damage to Al, Al2O3, Ti, and TixOy. This makes these embodiments of the present invention compatible with opening the sensor cavity after that Al bond pads have been formed and exposed, or after that an Al₂O₃ layer (for passivation and/or antifouling) has been formed on top of the device.

It is an advantage of embodiments of the present invention that long and/or interconnected fluidic channels can be formed in the FET sensor, without damaging the substrate region.

It is an advantage of embodiments of the present invention that the fabrication of the field-effect transistor sensor is compatible with current complementary metal oxide semiconductor (CMOS) technology, such as high-k CMOS technology.

In a first aspect, the present invention relates to a method according to claim 1.

In a second aspect, the present invention relates to a kit of parts according to claim 15.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Figs. 1 to 5 are schematic representations of cross-sections through intermediate structures in the fabrication of a FET sensor, in accordance with a first exemplary embodiment of the present invention.
Figs. 6 to 10 are schematic representations of cross-sections through intermediate structures in the fabrication of a FET sensor, in accordance with a second exemplary embodiment of the present invention.
Figs. 11 to 12 are schematic representations of cross-sections through intermediate structures in the fabrication of a FET sensor, in accordance with a third exemplary embodiment of the present invention.
Figs. 13 to 16 are schematic representations of cross-sections through intermediate structures in the fabrication of a FET sensor, in accordance with a fourth exemplary embodiment of the present invention.
Figs. 17 to 20 are schematic representations of cross-sections through intermediate structures in the fabrication of a FET sensor, in accordance with a fifth exemplary embodiment of the present invention.
Fig. 21 is a schematic representation of a cross-section through an intermediate structure in the fabrication of a FET sensor, in accordance with a sixth exemplary embodiment of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures, and techniques have not been shown in detail in order not to obscure an understanding of this description.

Reference will be made to transistors. These are devices having a first main electrode such as a drain, a second main electrode such as a source and a control electrode such as a gate for controlling the flow of electrical charges between the first and second main electrodes.

The following terms are provided solely to aid in the understanding of the invention.

As used herein, and unless otherwise specified, a nanocavity is an opening in a layer having at least one dimension ranging from 1 nm to 500 nm, preferably from 1 nm to 100 nm; preferably all dimensions of the nanocavity may range from 1 nm to 500 nm. The nanocavity may, for example, be defined by a width, a length, and a depth, wherein the depth is typically a dimension perpendicular to a surface of the nanocavity-comprising layer. At least one of (and preferably all of) the width, length and depth may range from 1 nm to 500 nm, preferably from 1 nm to 100 nm. The nanocavity is not typically limited by its shape and any cross-section therethrough may typically have any shape (e.g. triangular, rectangular, square, oval, circular, irregular, etc.); for example: an orifice of the nanocavity, co-planar with a surface of the nanocavity-comprising layer, may have any of the aforementioned shapes. In some embodiments, the nanocavity may have a depth smaller than a thickness of the nanocavity-comprising layer, such that a bottom of the nanocavity is defined within said layer. In other embodiments, the nanocavity may have a depth within 5% of the thickness of the nanocavity-comprising layer, while nevertheless having a closed bottom. In yet other embodiments, the nanocavity may completely cross through the nanocavity-comprising layer, thereby having both a top and a bottom of the nanocavity opening up to the surroundings; such a nanocavity may also be referred to as a nanopore. Such a nanopore may, for example, open up to the sensor cavity on one side and open up to another fluidic cavity on the opposite side.

As used herein, and unless otherwise specified, when a first entity is said to be removed selectively with respect to a second entity, this means that the first entity is removed faster than the second entity. Preferably, the removal process would remove the first entity at least twice faster, or more preferably at least five times faster, yet more preferably at least ten times faster, than the second entity. In some preferred embodiments, the second entity may be substantially not removed by the removal process.

In a first aspect, the present invention relates to a method for forming a field-effect transistor sensor, the method comprising the steps as defined by independent claim 1.

The field-effect transistor sensor may further comprise conventional elements as are well known to the skilled person. The FET sensor may, for example, be formed on a semiconductor substrate (e.g. a Si wafer, a silicon-on-insulator substrate or an epitaxial stack). The FET sensor may comprise a channel region in-between a source region and a drain region. The channel region may, for example, have a width and/or length of from 1 nm to 10 µm, preferably from 5 nm to 1 µm, yet more preferably from 10 nm to 100 nm. Source and drain contacts may connect to the source and drain regions. The gate dielectric typically covers the channel region and does not cover the source and the drain regions. During operation, an analyte solution may be present in the sensor cavity (e.g. it may contact the gate dielectric) and sensing by the FET sensor may be based on gating of the channel current by the analyte. The sensor cavity is therefore typically a cavity, opening on the gate dielectric, meant to receive an analyte solution, thereby gating the channel. In embodiments, the field-effect transistor sensor may be a chemical sensor, such as a sensor for sensing a chemical (e.g. an ionic species) or a pH, and/or it may be a biological sensor, such as a sensor for sensing a biomolecule (e.g. a nucleic acid or a protein). A biological sensor may typically be thought of as a specific case of a chemical sensor. In embodiments, the field-effect transistor sensor may be an ion-sensitive field-effect transistor (ISFET) or a field-effect transistor-based biosensor (BioFET). In embodiments, the field-effect transistor sensor may further comprise a nanocavity (e.g. the FET sensor may be a nanocavity-FET) or a nanopore (e.g. the FET sensor may be a nanopore-FET). In embodiments, the channel region may comprise the nanocavity or nanopore. The nanocavity or nanopore is formed in the substrate. When present, the nanocavity is in the substrate region, i.e. through the gate dielectric and at least partially through the substrate. When present, the nanopore is in the substrate region, i.e. through the gate dielectric and through the substrate.

The substrate region is typically a region of the substrate comprising elements that are preferably protected during fabrication of the FET sensor, such as the gate dielectric, and the nanocavity if present; particularly when they are exposed by the sensor cavity. These elements are typically relatively delicate structures which are prone to damage or contamination by various further processing steps in the fabrication. In embodiments, the substrate region may be that region of the substrate which is exposed by the sensor cavity. In embodiments, the substrate region may have a width and/or length of from 1 nm to 100 µm, preferably from 5 nm to 10 µm, yet more preferably from 10 nm to 1 µm.

In embodiments, the gate dielectric may be formed of SiO₂, SiON, Si₃N₄, Al₂O₃, HfO₂, TiO₂, or TazOs. In embodiments, the gate dielectric may comprise a surface functionalization. A BioFET may, for example, comprise a gate dielectric functionalized with bio-receptors.

Filling the sensor cavity with a sacrificial element advantageously allows protecting the substrate region (e.g. the gate dielectric and nanocavity, if present) from damage during further processing steps. In this way, it was advantageously found that the substrate region may be protected from a relatively early stage in the fabrication process onwards (e.g. soon after forming the gate dielectric and nanocavity, if present) and may later be removed at a relatively late stage in the fabrication process (e.g. right before use). Doing so advantageously allows to maximally protect the delicate elements throughout the fabrication process. The sacrificial element is an element that fills the sensor cavity and which is meant to be removed before that the device can be used. In embodiments, the sacrificial element may comprise a metal, e.g. selected from TiN, Wand TaN.

Metals can advantageously be oxidatively removed relatively easily and they have the additional advantage to be very heat resistant. In the present invention, by oxidative removal it is meant removal by means of reactive oxygen species. In general, removal methods based on soluble or volatile reactive oxygen species can be used. The oxidative removal is achieved using a peroxide-based wet-etching. Use of a peroxide-based wet-etching is a low temperature, end-user friendly and device friendly method. Indeed, it can be very selective with respect to Al, Al₂O₃, TiₓO_{y} and Ti.

The most preferred combination is a metal selected from TiN, W and TaN, removed with a peroxide (eventually in the presence of exposed Al, Al₂O₃, TiₓO_{y} or Ti).

In embodiments, the sacrificial element may have a thickness of from 1 nm to 1 µm, preferably from 10 nm to 500 nm, yet more preferably from 20 nm to 100 nm.

The further processing steps referred to above typically comprise providing one or more layers, e.g. a back-end-of-line (BEOL) isolation stack, over the sacrificial element.

For instance, after the sacrificial element is formed, and before it is removed, source and drain regions may be defined (by doping) on either side of the sacrificial element, metal contacts (e.g. TiN) may be formed on the source and drain regions, Al pads may be formed on the metal contacts, an isolation stack may be provided over the whole FET and a passivation layer (e.g. Al₂O₃) may be provided on top of the isolation stack (with openings through the passivation layer and the isolation stack for accessing the Al pads).

In embodiments, the access to the sacrificial element may be an access suitable for contacting the sacrificial element with an oxidizing agent. In embodiments, the access to the sacrificial element may comprise an opening through the one or more layers. This opening is suitable for introducing the oxidizing agent and for contacting the oxidizing agent with the sacrificial element. In all embodiments, the one or more layers have a combined thickness of at least 100 nm, preferably at least 500 nm, yet more preferably at least 1 µm. In embodiments, a dimension of a bottom of the opening (e.g. a width and/or a length) may be smaller than, equal to or larger than a dimension of a top of the sacrificial structure. Regardless of the dimensions of the opening, the overlay requirements for this opening with respect to the substrate region are in the present invention advantageously reduced; as compared to a case where no sacrificial structure is present and a similar opening is formed for directly uncovering the substrate region. This is beneficially so because the dimensions and location of the sensor cavity, and thus of the substrate region that is uncovered, are advantageously determined by the sacrificial structure (and may thus be defined and fixed early on in the fabrication process, allowing smaller dimensions and a more precise control of location than could be achieved later in the process). It is then sufficient for a bottom of the opening to overlap with a top of the sacrificial structure to such a degree that an access is present to the sacrificial structure for an oxidizing agent to remove said sacrificial structure. Or, alternatively put, it is sufficient for a bottom of the opening to overlap with a top of the sensor cavity to such a degree that an analyte solution may enter the sensor cavity. Likewise, in embodiments, the access may be located such that it overlays the substrate region underneath the sacrificial element, but it need not do so. A source and a drain region are typically present on either side of the substrate region and the access to the sacrificial element preferably does not overlap with the source and the drain region.

In embodiments, the sensor cavity may have its smallest lateral dimension measuring at most 100 nm and the access may have a dimension, in the direction of the smallest lateral dimension of the cavity, larger than the smallest lateral dimension of the cavity. This is advantageous because it permits to form a very narrow and accurately placed sensor cavity without having to etch said narrow and accurately placed cavity through hundreds of nanometres of overlayers at the end of the manufacturing process. Instead, the small and accurately placed sensor cavity is formed at an early stage of the fabrication process and an access (e.g. before the formation of source and drain regions), which can be less narrow and does not have to be placed as accurately (as long as it overlaps with the sensor cavity), is then etched through the overlayers.

In embodiments, the sacrificial material being removable by oxidation may comprise the sacrificial material being selectively removable by oxidation with respect to other exposed materials of the intermediate. In all embodiments, the intermediate structure comprises an exposed material selected from Al, Al₂O₃, Ti, and TiₓO_{y} (e.g. TiO, TiO₂ or Ti₂O₃) and the sacrificial element is removable by oxidation selectively with respect to said material. Al is often present as an exposed material in FET sensors in the form of Al bond pads, which may be used for electrically bonding the FET sensor to other components. Likewise, Al₂O₃ is a well-liked material for use as a passivation and/or anti-fouling layer, e.g. in the form of a top coating of the FET sensor. It is thus an advantage that the sacrificial element in the present invention can be removed selectively with respect to these materials, thus allowing them to remain uncovered when doing so; as opposed to requiring additional steps of first covering and later once again uncovering these materials.

In embodiments, a further sacrificial element (i.e. second sacrificial element) may overlay the sacrificial element (i.e. first sacrificial element). In embodiments, the further sacrificial element may be made of amorphous silicon or a Si₃N₄. The second sacrificial element may perform a similar beneficial function with respect to the first sacrificial element, as the first sacrificial element with respect to the substrate region; i.e. the second sacrificial element may advantageously protect the first sacrificial element during the further processing steps, and/or it may act as an intermediate etch stop layer when opening the one or more layers over the first sacrificial element, and/or it may reduce the overlay requirements for the opening. In embodiments, the further sacrificial element may have a thickness of from 10 nm to 10 µm, preferably from 50 nm to 1 µm.

The second sacrificial element may also be used to define a fluidic channel (e.g. a microfluidic channel) in the FET sensor. In embodiments, the intermediate may comprise a fluidic channel (e.g. a microfluidic channel), the fluidic channel being optionally filled with the further sacrificial element. In embodiments, the fluidic channel may have at least one dimension (e.g. a length, a width or a depth) longer than 1 µm, for example up to 1 cm. In embodiments, a plurality of fluidic channels may be interconnected.

In preferred embodiments, the sacrificial element may comprise a metal. In embodiments, the metal may be selected from TiN, W, and TaN. In embodiments, the peroxide-based wet etching may comprise the use of a peroxide. In embodiments, the peroxide may be an aqueous solution. In embodiments, the peroxide may comprise up to 31 wt% peroxide, e.g. from 5 to 25 wt% or from 10 to 20 wt%. In embodiments, a pH of the peroxide may be from 5 to 8, preferably from 5 to 7.

In embodiments, step d of opening an access to the sacrificial element through the one or more layers may comprise etching an opening of at least 100 nm deep, preferably at least 500 nm, yet more preferably at least 1 µm. in embodiments, step d may comprise a dry etching. Opening the access in step d can advantageously be performed using a cruder and/or more aggressive etching technique than the removal of the sacrificial element in step e. This typically allows step d to be performed relatively quickly and/or relative cheaply, through the bulk thickness of the layers overlying the substrate region, down to the sacrificial element. In embodiments, step d may be performed selectively with respect to the sacrificial element. The sacrificial element can thus advantageously be used as an etch stop layer for the etching of step d. It is a further advantage that the overlay requirements for the etching in step d can be reduced (cf. supra).

In embodiments, step d may comprise the use of a mask and may be removable by the same selective removal as the sacrificial element. In embodiments, the mask may comprise a metal (e.g. selected from TiN, W, and TaN). In embodiments, the mask may comprise a same material as the sacrificial element. Particularly when step d is performed selectively with respect to the sacrificial element, it is advantageous to use a similar material as a mask (e.g. a hardmask) for performing said step d. The mask is then later readily removed together with the sacrificial element, requiring no additional steps. The mask may for example advantageously cover, and thereby protect, an exposed material (e.g. a top coating) which is sensitive to the material removal of step d and/or of step e.

Step d is not performed by planarizing the one or more layers until the sacrificial element is exposed but is performed by forming an opening through the one or more layers. This opening typically does not overlap with the source and drain regions typically present (and provided between steps b and c).

In embodiments, the sensor cavity may have its smallest lateral dimension measuring at most 100 nm and step d of opening an access to the sacrificial element may comprise opening an access having a dimension, in the direction of the smallest lateral dimension of the cavity, larger than the smallest lateral dimension of the cavity.

In all embodiments, during step e, the intermediate comprises an exposed material selected from Al, Al₂O₃, Ti and TiₓO_{y} (e.g. TiO, TiO₂ or Ti₂O₃) and step e is performed selectively with respect to said material.

In embodiments, the method may comprise a further step b', after step b and before step c, of providing a further (i.e. second sacrificial element) over the sacrificial element (i.e. first sacrificial element); and step c or step d may comprise selectively removing the further sacrificial element. In embodiments, the further sacrificial element may comprise an amorphous silicon or a Si₃N₄ and removing the further sacrificial element may comprise a wet etching (e.g. a phosphoric acid or TMAH based etching) or a dry etching. In embodiments, removing the further sacrificial element may be performed selectively with respect to the sacrificial element (i.e. first sacrificial element).

In embodiments, the further sacrificial element (i.e. second sacrificial element) may define a channel in the intermediate. In embodiments, a fluidic channel may be formed in the intermediate by selectively removing the further sacrificial element. In embodiments, the fluidic channel may have at least one dimension (e.g. a length, a width or a depth) longer than 1 µm, for example up to 1 cm. In embodiments, a plurality of fluidic channels may be interconnected. While in absence of the first sacrificial element, a good etch selectivity of the second sacrificial element with respect to the gate dielectric can still be achieved (e.g. amorphous silicon or a Si₃N₄ can be removed with phosphoric acid or TMAH with a selectivity of 1000/1 versus SiO₂), it is nevertheless not typically sufficient to allow fluidic channels longer than 1 µm to be created without damaging the gate dielectric. Conversely, since the substrate region in the present invention is protected by the first sacrificial element, long interconnected fluidic channels can advantageously be formed upon removing a corresponding second sacrificial material, without the etching reaching down to the gate dielectric. In embodiments, selectively removing the further sacrificial element, thereby forming the fluidic channel, may be performed before or during step d. In some embodiments, selectively removing the further sacrificial element, thereby forming the fluidic channel, may be performed before the end of step c. In these embodiments, an access to the fluidic channel may be temporarily sealed (e.g. with a dielectric) and step d may comprise removing the temporary seal. In alternative embodiments, selectively removing the further sacrificial element, thereby forming the fluidic channel, may be performed after step c; e.g. as part of step d.

In embodiments, prior to step b, the gate dielectric may be formed of SiO₂, Si₃N₄, Al₂O₃, HfO₂, TiO₂, and TazOs. In embodiments, prior to step b, the gate dielectric may comprise a surface functionalization (e.g. bio-receptors). In some embodiments, the method may comprise an additional step f, after step e, of replacing a first gate dielectric (e.g. SiO₂) by a second gate dielectric. The second gate dielectric may, for example, being a bio-compatible high-k dielectric, e.g. selected from Si₃N₄, Al₂O₃, HfO₂, TiO₂, and TazOs. In some embodiments, the method may comprise an additional step g, after step e or after step f, of applying a surface functionalization to the gate dielectric (e.g. functionalizing bio-receptors thereto).

In embodiments, any feature of any embodiment of the first aspect may independently be as correspondingly described for any embodiment of any other aspect.

In a second aspect, the present invention relates to a kit of parts comprising the features as defined by independent claim 15.

In embodiments, the peroxide may be an aqueous solution. In embodiments, the peroxide solution may comprise up to 31 wt% peroxide, e.g. from 5 to 25 wt% or from 10 to 20 wt%. In embodiments, the peroxide may be hydrogen peroxide. In all embodiments, a temperature of the peroxide is 40 °C or below, preferably 25 °C or below, yet more preferably 10 °C or below. It has been observed that the selectivity of a peroxide-based etch for etching e.g. TiN with respect to SiOz may be higher for higher peroxide fractions and/or for lower temperatures.

In embodiments, a pH of the peroxide may be from 4 to 8, preferably from 5 to 7. The pH of the peroxide may, for example, be increased by the addition of NH₄OH. The etch selectivity for etching the sacrificial element with respect to a further material may typically be controlled by adjusting the pH of the peroxide, depending on the nature of the materials. Nevertheless, for a certain pH, some exposed materials in the intermediate which are not to be removed may become unstable and may dissolve; for example, Al₂O₃ may start to dissolve when the pH is outside the range of about 5 to 7. It may, therefore, in embodiments, be preferred to avoid such pH values and to keep the peroxide at a pH from 5 to 7.

The peroxide is typically advantageously a relatively cheap and a low to moderate risk chemical, particularly in small quantities, and may be safely used even by untrained persons. The kit of parts therefore advantageously enables the end-user (e.g. a non-specialist) to remove the sacrificial element in the intermediate, thereby uncovering the substrate region, shortly before use of the FET sensor, by simply contacting the peroxide with the intermediate. In this way, the substrate region can advantageously remain protected throughout the fabrication of the intermediate and even during transport thereof, thus reducing the risk of damaging the substrate region. Furthermore, after removal of the sacrificial element, the peroxide (e.g. hydrogen peroxide) typically readily decomposes into water and oxygen. The peroxide can thus be left in contact with FET sensor, i.e. there is typically no need to remove it, or it can be easily diluted and/or washed away. This advantageously allows the sensor cavity to be kept in a wet state, thereby e.g. reducing the risk for trapping air bubbles in the FET sensor (e.g. in the sensor cavity) or for damaging the FET sensor (e.g. the substrate region) due to drying out of some of its components.

In preferred embodiments, the sacrificial element may comprise a metal. In embodiments, the metal may be selected from TiN, W, and TaN.

In embodiments, any feature of any embodiment of the second aspect may independently be as correspondingly described for any embodiment of any other aspect.

The invention will now be described by a detailed description of several embodiments of the invention. It is clear that other embodiments of the invention can be configured according to the knowledge of the person skilled in the art without departing from the true technical teaching of the invention, the invention being limited only by the terms of the appended claims.

### Example 1: Fabrication of a field-effect transistor sensor

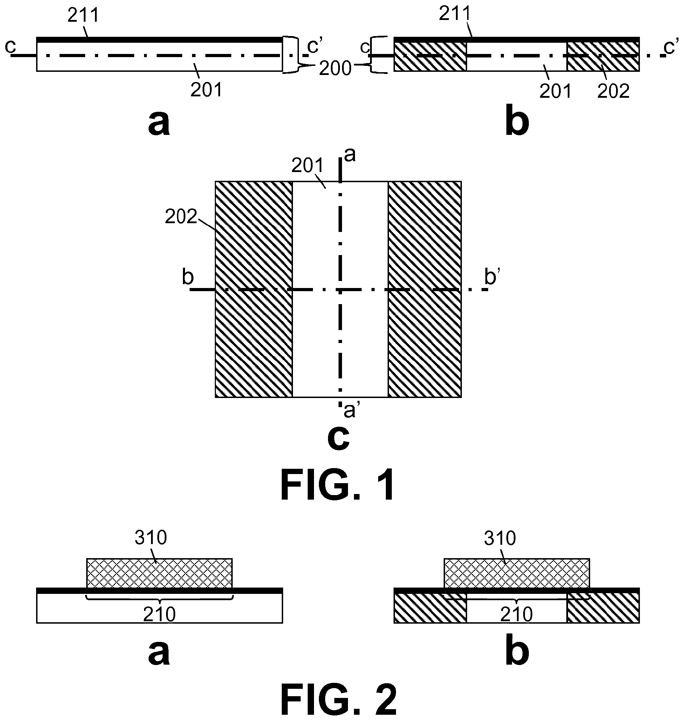

We now refer to Fig. 1. A substrate (200) is provided comprising a channel region (201) between two source/drain regions (not shown), isolation regions (202) (e.g. a shallow trench isolation, STI) and a gate dielectric (211) over at least the channel region (201); the substrate (200) may further comprise a support layer (not shown) carrying the channel (201), isolation (202) and source/drain regions. In an earlier step, the channel (201), isolation (202) and source/drain regions may, for example, have been formed on or in a semiconductor substrate (e.g. a Si wafer or a silicon-on-insulator substrate). A layer of the gate dielectric (211) (e.g. SiO₂) may subsequently have been formed (e.g. conformally) over at least the channel region (201). Fig. 1 shows different views of the substrate (200): Figs. 1a and 1b correspond to two perpendicular vertical cross-sections through the substrate (200), the direction of these cross-sections being indicated in Fig. 1c by the section lines a-a' and b-b' respectively; Fig. 1c corresponds to a horizontal cross-section through the structure, the level of the cross-section being indicated on Figs. 1a and 1b by the section line c-c'.

We now refer to Fig. 2. A metal (e.g. TiN) sacrificial element (310) is provided over a substrate region (210) (e.g. comprising a part of the gate dielectric (211) overlaying the channel region (201)). The sacrificial element (310) may, for example, be deposited as a layer over the gate dielectric (211) and subsequently lithographically patterned. In Fig. 2, and all further figures in this example, only the two perpendicular vertical cross-sections are shown, while the horizontal cross-section is omitted.

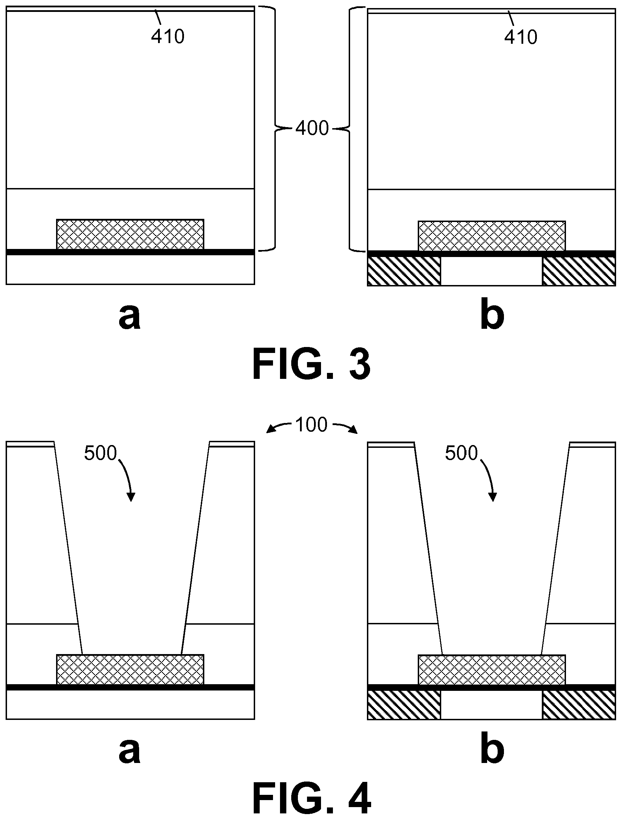

We now refer to Fig. 3. The FET sensor is further processed and a plurality of additional layers (400) is thereby formed over the substrate (200) and the sacrificial element (310). These may, for example, comprise a back-end-of-line isolation stack and metallization layers. A film (410) may also be provided over the structure for selective functionalization (e.g. an Al₂O₃ layer). The selective functionalization may for example aid with the biocompatibility and/or passivation and/or anti-fouling of the FET sensor.

We now refer to Fig. 4. An access (500) to the sacrificial element (310) is formed by etching (e.g. by dry etching) an opening through the plurality of additional layers (400); the intermediate (100) is thereby formed. The etching may be a relatively aggressive etching, capable of etching through a thickness of several hundred nanometers of the additional layers (400) in a relatively short time. The sacrificial element (310) may act as an etch stop layer for said etching.

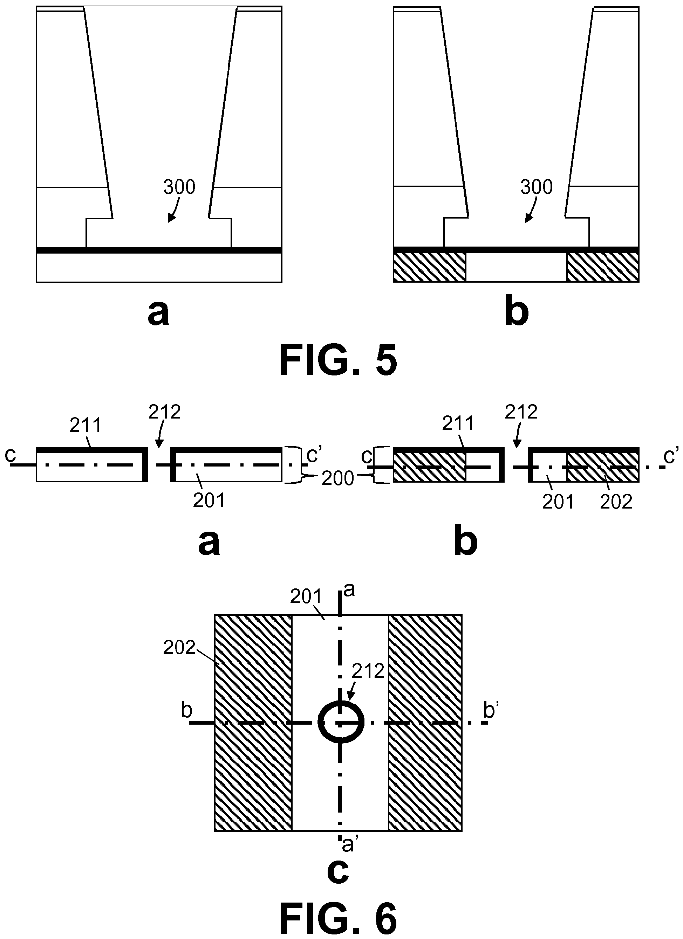

We now refer to Fig. 5. The sacrificial element (310) is selectively removed by oxidation to open up the sensor cavity (300) over the substrate region (210). The selective oxidative removal comprises the use of a peroxide (e.g. an aqueous solution of 20 wt% hydrogen peroxide). Preferably, the sacrificial element (310) is removed at the end of the FET sensor fabrication, e.g. shortly before use of the sensor.

### Example 2: Fabrication of a field-effect transistor sensor comprising a nanocavity

Example 2 is a variation on example 1, wherein the substrate region (210) additionally comprises a nanocavity (212) (e.g. a nanopore).

We now refer to Fig. 6. A substrate (200) is provided comprising a channel region (201) between two source/drain regions (not shown), isolation regions (202) (e.g. a shallow trench isolation, STI), a nanopore (212) in the channel region (201), and a gate dielectric (211) over at least the channel region (201) and lining the nanopore (212); the substrate (200) may further comprise a support layer (not shown) carrying the channel (201), isolation (202) and source/drain regions. In an earlier step, the channel (201), isolation (202) and source/drain regions may, for example, have been formed on or in a semiconductor substrate (e.g. a Si wafer or a silicon-on-insulator substrate); followed by forming the nanopore (212) in the channel region (201). A layer of the gate dielectric (211) (e.g. SiO₂) may subsequently have been formed (e.g. conformally) over at least the channel region (201). Fig. 6 shows different views of the substrate (200): Figs. 6a and 6b correspond to two perpendicular vertical cross-sections through the substrate (200), the direction of these cross-sections being indicated in Fig. 6c by the section lines a-a' and b-b' respectively; Fig. 6c corresponds to a horizontal cross-section through the structure, the level of the cross-section being indicated on Figs. 6a and 6b by the section line c-c'.

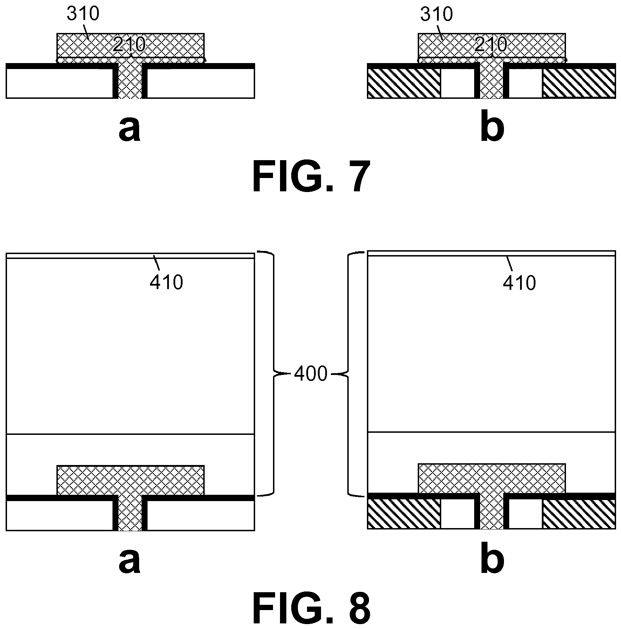

We now refer to Fig. 7. A metal (e.g. TiN) sacrificial element (310) is provided over a substrate region (210) (e.g. comprising a part of the gate dielectric (211) overlaying the channel region (201)) and filling the nanopore (212). The sacrificial element (310) may, for example, be deposited as a layer over the gate dielectric (211) and subsequently lithographically patterned. In Fig. 7, and all further figures in this example, only the two perpendicular vertical cross-sections are shown, while the horizontal cross-section is omitted.

We now refer to Fig. 8. The FET sensor is further processed and a plurality of additional layers (400) is thereby formed over the substrate (200) and the sacrificial element (310). These may, for example, comprise a back-end-of-line isolation stack and metallization layers. A film (410) may also be provided over the structure for selective functionalization (e.g. an Al₂O₃ layer). The selective functionalization may for example aid with the biocompatibility and/or passivation and/or anti-fouling of the FET sensor.

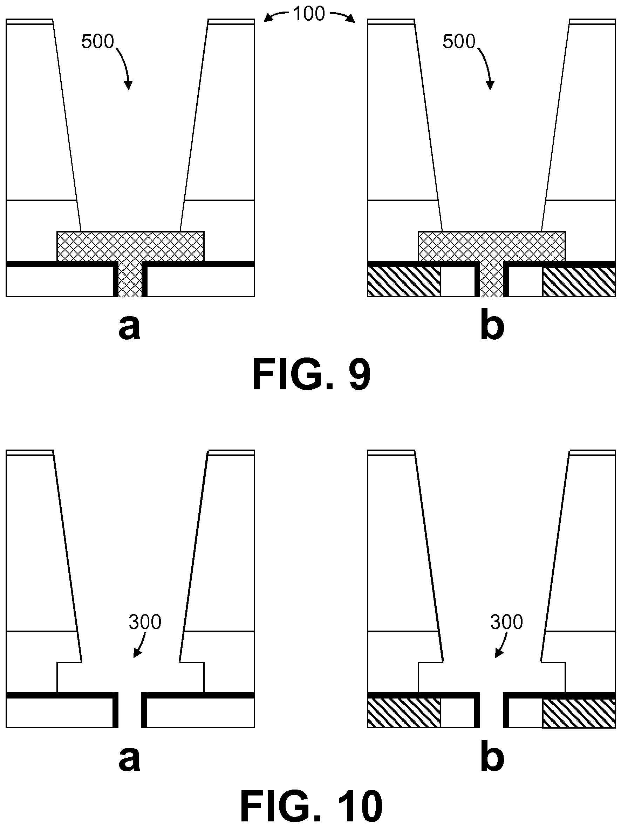

We now refer to Fig. 9. An access (500) to the sacrificial element (310) is formed by etching (e.g. by dry etching) an opening through the plurality of additional layers (400); the intermediate (100) is thereby formed. The etching may be a relatively aggressive etching, capable of etching through a thickness of several hundred nanometers of the additional layers (400) in a relatively short time. The sacrificial element (310) may act as an etch stop layer for said etching.

We now refer to Fig. 10. The sacrificial element (310) is selectively removed by oxidation to open up the sensor cavity (300) over the substrate region (210), including the nanopore (212). The selective oxidative removal comprises the use of a peroxide (e.g. an aqueous solution of 20 wt% hydrogen peroxide). Preferably, the sacrificial element (310) is at the end of the FET sensor fabrication, e.g. shortly before use of the sensor.

### Example 3: Fabrication of a field-effect transistor sensor using a mask (600)

Example 3 is a variation on example 1, wherein a mask (600), composed of a similar material as the sacrificial element (310), is used when etching through the plurality of additional layers (400).

The initial steps in the fabrication process are as described in example 1 with respect to Figs. 1 to 3.

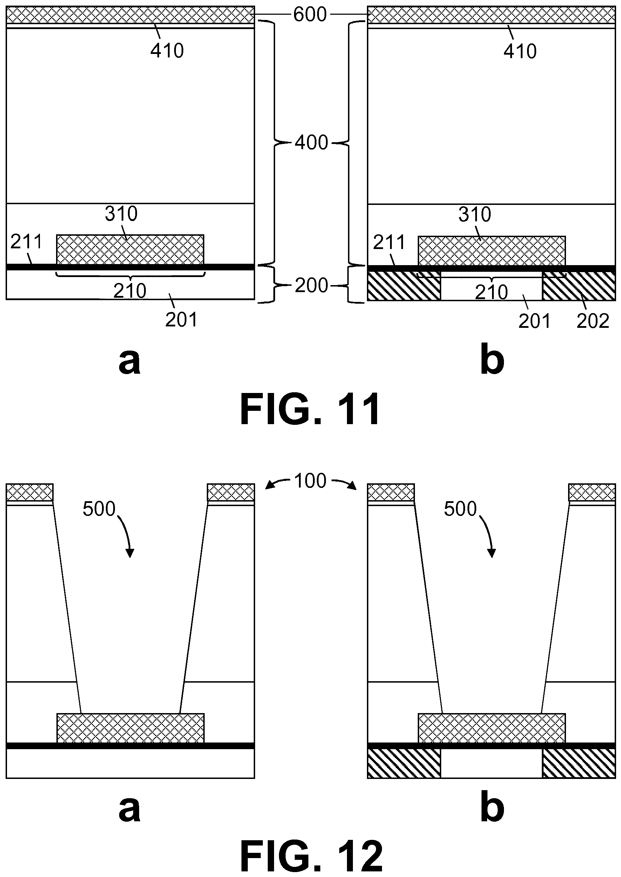

We now refer to Fig. 11. A layer of a mask (600) is deposited over the plurality of additional layers (400). The mask (600) comprises a similar material as the sacrificial layer, being removable by the same removal technique.

We now refer to Fig. 12. An opening is made in the mask (600) layer, e.g. using plasma-based etching. Subsequently, an access (500) to the sacrificial element (310) is formed by etching (e.g. by dry etching), using the mask (600), the opening further down through the plurality of additional layers (400); the intermediate (100) is thereby formed. The etching may be a relatively aggressive etching, capable of etching through a thickness of several hundred nanometers of the additional layers (400) in a relatively short time. The sacrificial element (310) may act as an etch stop layer for said etching.

We now refer to Fig. 5. The sacrificial element (310) is selectively removed by oxidation to open up the sensor cavity (300) over the substrate region (210); the mask (600) is thereby simultaneously removed. The selective oxidative removal comprises the use of a peroxide (e.g. an aqueous solution of 20 wt% hydrogen peroxide). Preferably, the sacrificial element (310) and mask (600) are removed at the end of the FET sensor fabrication, e.g. shortly before use of the sensor.

### Example 4: Fabrication of a field-effect transistor sensor using a further sacrificial element (310)

Example 4 is a variation on example 3, wherein also a further, second, sacrificial element (310) is used.

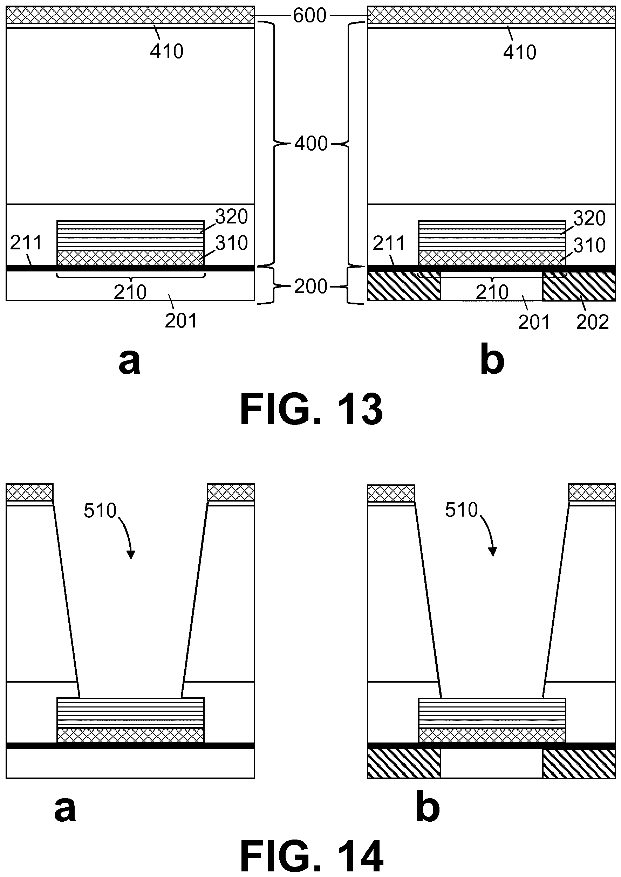

We now refer to Fig. 13. The initial steps in the fabrication process are similar to those described in example 3 with respect to Figs. 1 to 3 and 11; differing therefrom in that a second sacrificial element (320) (e.g. amorphous silicon or Si₃N₄) is provided after the first sacrificial element (310) (Fig. 2), overlaying said first sacrificial element (310). This may, for example, be achieved by depositing a layer of the first sacrificial element (310), depositing a layer of the second sacrificial element (320) and then lithographically patterning both. Alternatively, the first sacrificial element (310) may be fully formed before providing the second sacrificial element (320).

We now refer to Fig. 13. An opening is made in the mask (600) layer, e.g. using plasma-based etching. Subsequently, an access (510) to the second sacrificial element (320) is formed by etching (e.g. by dry etching), using the mask (600), the opening further down through the plurality of additional layers (400). The etching may be a relatively aggressive etching, capable of etching through a thickness of several hundred nanometers of the additional layers (400) in a relatively short time. The second sacrificial element (320) may act as an etch stop layer for said etching.

We now refer to Fig. 14. An access (500) to the first sacrificial element (310) is formed by removing the second sacrificial element (320), using phosphoric acid, TMAH or a dry etch; the intermediate (100) is thereby formed.

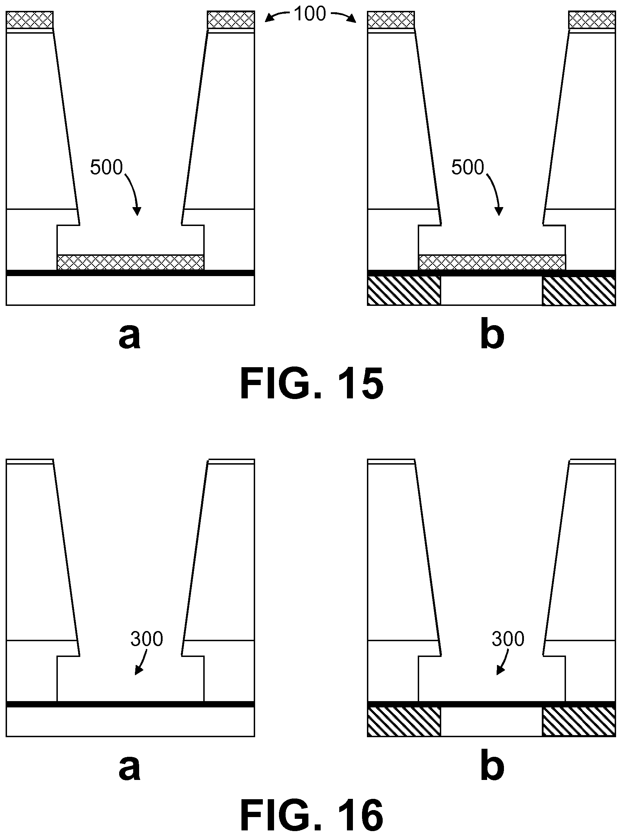

We now refer to Fig. 15. The first sacrificial element (310) is selectively removed by oxidation to open up the sensor cavity (300) over the substrate region (210); the mask (600) is thereby simultaneously removed. The selective oxidative removal comprises the use of a peroxide (e.g. an aqueous solution of 20 wt% hydrogen peroxide). Preferably, the first sacrificial element (310) and mask (600) are removed at the end of the FET sensor fabrication, e.g. shortly before use of the sensor.

### Example 5: Fabrication of a field-effect transistor sensor using the further sacrificial element (310) for forming a fluidic channel (700)

Example 5 is a variation on example 4, wherein the further sacrificial element (310) is used to form a fluidic channel (700).

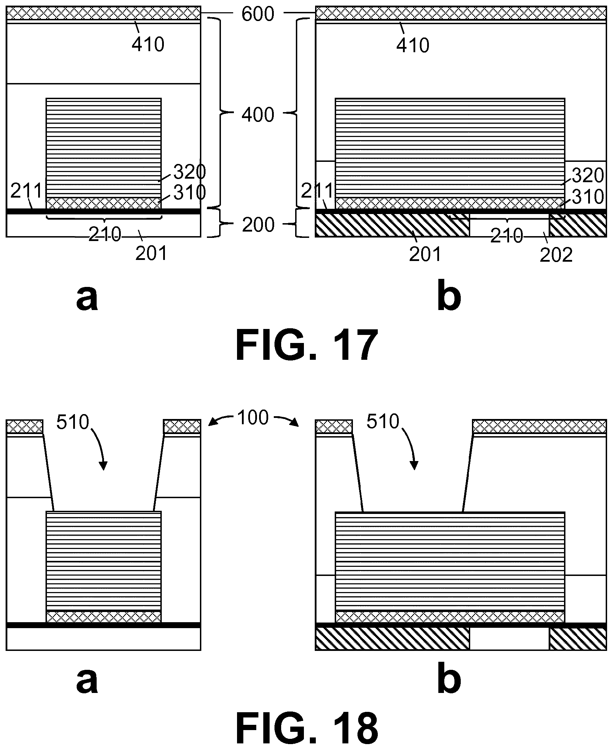

We now refer to Fig. 17. The initial steps in the fabrication process are similar to those described in example 4 with respect to Figs. 1 to 3, 11 and 13; the difference being that the second (and optionally first) sacrificial element (310) is larger and defines a volume that will form a fluidic channel (700) (e.g. a microfluidic channel (700)) in the intermediate (100).

We now refer to Fig. 18. An opening is made in the mask (600) layer, e.g. using a plasma-based etching. Subsequently, an access (510) to the second sacrificial element (320) is formed by etching (e.g. by dry etching), using the mask (600), the opening further down through the plurality of additional layers (400). The etching may be a relatively aggressive etching, capable of etching through a thickness of several hundred nanometers of the additional layers (400) in a relatively short time. The second sacrificial element (320) may act as an etch stop layer for said etching.

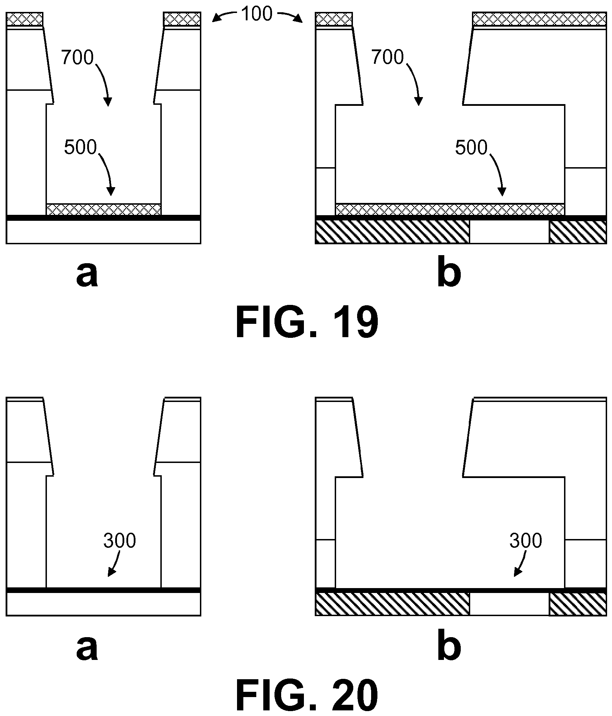

We now refer to Fig. 19. An access (500) to the first sacrificial element (310) is formed by removing the second sacrificial element (320), using phosphoric acid, TMAH or a dry etch, simultaneously opening up the microfluidic channel (700). The intermediate (100) is thereby formed.

We now refer to Fig. 20. The first sacrificial element (310) is selectively removed by oxidation to open up the sensor cavity (300) over the substrate region (210); the mask (600) is thereby simultaneously removed. The selective oxidative removal comprises the use of a peroxide (e.g. an aqueous solution of 20 wt% hydrogen peroxide). Preferably, the first sacrificial element (310) and mask (600) are removed at the end of the FET sensor fabrication, e.g. shortly before use of the sensor.

### Example 6: Fabrication of a field-effect transistor sensor by using an access of larger lateral dimension than the corresponding dimension of the sensor cavity.

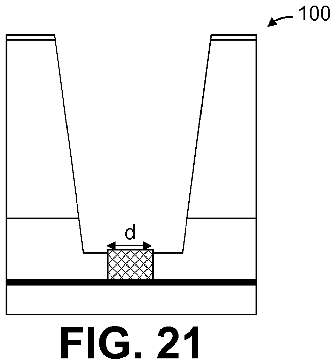

We now refer to Fig. 21. Example 1 is repeated except that the sensor cavity (300) has its smallest lateral dimension (d) measuring at most 100 nm and wherein the access (500) has a dimension (d'), in the direction of the smallest lateral dimension of the cavity, larger than the smallest lateral dimension of the cavity.

While examples 2 to 5 have been described as distinct variations on examples 1 or 3, it will be clear that these variations can in embodiments easily be combined. For example, an embodiment in accordance with example 1 may comprise a nanocavity (212) in accordance with example 2, and/or the use of a mask (600) in accordance with example 3, and/or the use of a further sacrificial element (310) in accordance with example 4, and/or a fluidic channel (700) in accordance with example 5.

It is to be understood that although preferred embodiments, specific constructions, and configurations, as well as materials, have been discussed herein for devices according to the present invention, various changes or modifications in form and detail may be made without departing from the scope and technical teachings of this invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A method for forming a field-effect transistor sensor, the method comprising:
a. providing a substrate having a substrate region (210) comprising a gate dielectric (211) and optionally a nanocavity (212),
b. providing a sacrificial element (310) over the substrate region (210),
c. providing one or more layers (400) over the sacrificial element (310),
d. opening an access (500) to the sacrificial element (310) through the one or more layers (400), and
e. selectively removing the sacrificial element (310), thereby opening a sensor cavity (300) over the substrate region (210),
**characterized in that** the sacrificial element (310) provided in step b is removable by a peroxide-based wet-etching at a temperature of 40°C or below, the one or more layers (400) have a combined thickness of at least 100 nm over the sacrificial element (310), and the sacrificial element (310) is removed in step e by a peroxide-based wet-etching at a temperature of 40°C or below,
further **characterized in that** during step e, an intermediate (100) obtained after step d comprises an exposed material selected from Al, Al₂O₃, Ti and TiₓO_{y} and wherein step e is performed selectively with respect to said material.

2. The method according to claim 1, wherein the sacrificial element (310) comprises a metal.

3. The method according to claim 2, wherein the metal is selected from TiN, W, and TaN.

4. The method according to any one of the preceding claims, wherein step d of opening an access (500) to the sacrificial element (310) through the one or more layers (400) have a combined thickness of at least 500 nm, yet more preferably at least 1 µm.

5. The method according to any of claims 1 to 4, wherein step d comprises the use of a mask (600) and wherein the mask (600) is removable by the same selective removal as the sacrificial element (310).

6. The method according to any of claims 1 to 5, wherein
- the method comprises a further step b', after step b and before step c, of providing a further second sacrificial element (320) over the sacrificial element (310), and
- step c or step d comprises selectively removing the further sacrificial element (320).

7. The method according to claim 6, wherein a fluidic channel (700) is formed in the intermediate (100) by selectively removing the further sacrificial element (320).

8. The method according to any of the preceding claims, wherein the sensor cavity (300) has its smallest lateral dimension measuring at most 100 nm and wherein the access (500) has a dimension, in the direction of the smallest lateral dimension of the sensor cavity (300), larger than the smallest lateral dimension of the sensor cavity (300).

9. The method according to any one of the preceding claims further comprising a step d' of providing Al bond pads, wherein the intermediate (100) obtained after step d' comprises exposed Al bond pads and wherein step e is performed in presence of said exposed Al bond pads.

10. The method according to any one of the preceding claims, wherein the peroxide wet-etching is performed with a peroxide solution comprising from 5 to 25 wt% peroxide.

11. The method according to any one of the preceding claims, wherein the peroxide wet-etching is performed with a peroxide solution comprising from 10 to 20 wt% peroxide.

12. The method according to any one of the preceding claims, wherein the peroxide wet-etching is performed at a temperature of 25°C or below.

13. The method according to any one of the preceding claims, wherein the peroxide wet-etching is performed at a temperature of 10°C or below.

14. The method according to any one of the preceding claims, wherein the peroxide wet-etching is performed at a pH of from 4 to 8.

15. A kit of parts for carrying out the method according to any of claims 1-14, comprising:
a) an intermediate (100) in the fabrication of a field-effect transistor sensor, comprising:
i. a substrate region (210) comprising a gate dielectric (211) and optionally a nanocavity (212),
ii. a sensor cavity (300) over the substrate region (210), the sensor cavity (300) being filled with a sacrificial element (310) for protecting the substrate region (210),
iii. one or more layers (400) above the sacrificial element (310), and
an access (500) opened in the one or more layers (400), exposing at least part of the sacrificial element (310);
iv. an exposed material selected from Al, Al₂O₃, Ti and TiₓO_{y},
wherein the kit of parts further comprises
b) a peroxide at a temperature of 40°C or below for selectively removing the sacrificial element (310),
wherein the one or more layers (400) have a combined thickness of at least 100 nm and the sacrificial element (310) is removable by a peroxide-based wet-etching using the peroxide as defined in point b).

## Patentansprüche

1. Ein Verfahren zum Bilden eines Feldeffekttransistor-Sensors, wobei das Verfahren umfasst:
a.- Bereitstellen eines Substrats, das einen Substratbereich (210) aufweist, der ein Gate-Dielektrikum (211) und gegebenenfalls einen Nanohohlraum (212) umfasst,
b.- Bereitstellen eines Opferelements (310) über dem Substratbereich (210),
c.- Bereitstellen einer oder mehrerer Schichten (400) über dem Opferelement (310),
d.- Öffnen eines Zugangs (500) zu dem Opferelement (310) durch die eine oder die mehreren Schichten (400), und
e.- selektives Entfernen des Opferelements (310), wodurch ein Sensorhohlraum (300) über dem Substratbereich (210) geöffnet wird,
**dadurch gekennzeichnet, dass** das in Schritt b bereitgestellte Opferelement (310) durch ein Nassätzen auf Peroxidbasis bei einer Temperatur von 40 °C oder darunter entfernt werden kann, die eine oder die mehreren Schichten (400) eine kombinierte Dicke von mindestens 100 nm über dem Opferelement (310) aufweisen und das Opferelement (310) in Schritt e durch ein Nassätzen auf Peroxidbasis bei einer Temperatur von 40 °C oder darunter entfernt wird,
weiter **dadurch gekennzeichnet, dass** während Schritt e ein Zwischenprodukt (100), das nach Schritt d erhalten wird, ein freiliegendes Material umfasst, ausgewählt aus Al, Al₂O₃, Ti und TiₓO_{y}, und wobei Schritt e selektiv in Bezug auf das Material durchgeführt wird.

2. Das Verfahren nach Anspruch 1, wobei das Opferelement (310) ein Metall umfasst.

3. Das Verfahren nach Anspruch 2, wobei das Metall ausgewählt ist aus TiN, W und TaN.

4. Das Verfahren nach einem der vorstehenden Ansprüche, wobei Schritt d des Öffnens eines Zugangs (500) zu dem Opferelement (310) durch die eine oder die mehreren Schichten (400) eine kombinierte Dicke von mindestens 500 nm, noch bevorzugter mindestens 1 um, aufweisen.

5. Das Verfahren nach einem der Ansprüche 1 bis 4, wobei Schritt d die Verwendung einer Maske (600) umfasst, und wobei die Maske (600) durch dasselbe selektive Entfernen wie das Opferelement (310) entfernt werden kann.

6. Das Verfahren nach einem der Ansprüche 1 bis 5, wobei
- das Verfahren nach Schritt b und vor Schritt c einen weiteren Schritt b' des Bereitstellens eines weiteren zweiten Opferelements (320) über dem Opferelement (310) umfasst, und
- Schritt c oder Schritt d das selektive Entfernen des weiteren Opferelements (320) umfasst.

7. Das Verfahren nach Anspruch 6, wobei durch selektives Entfernen des weiteren Opferelements (320) ein Fluidkanal (700) im Zwischenprodukt (100) gebildet wird.

8. Das Verfahren nach einem der vorstehenden Ansprüche, wobei der Sensorhohlraum (300) seine kleinste seitliche Abmessung aufweist, die höchstens 100 nm misst, und wobei der Zugang (500) in der Richtung der kleinsten seitlichen Abmessung des Sensorhohlraums (300) eine Abmessung aufweist, die größer ist als die kleinste seitliche Abmessung des Sensorhohlraums (300).

9. Das Verfahren nach einem der vorstehenden Ansprüche, weiter einen Schritt d' des Bereitstellens von Al-Bondpads umfassend, wobei das Zwischenprodukt (100), das nach Schritt d' erhalten wird, freiliegende Al-Bondpads umfasst, und wobei Schritt e in Gegenwart der freiliegenden Al-Bondpads durchgeführt wird.

10. Das Verfahren nach einem der vorstehenden Ansprüche, wobei das Peroxid-Nassätzen mit einer Peroxidlösung durchgeführt wird, die 5 bis 25 Gew.-% Peroxid umfasst.

11. Das Verfahren nach einem der vorstehenden Ansprüche, wobei das Peroxid-Nassätzen mit einer Peroxidlösung durchgeführt wird, die 10 bis 20 Gew.-% Peroxid umfasst.

12. Das Verfahren nach einem der vorstehenden Ansprüche, wobei das Peroxid-Nassätzen bei einer Temperatur von 25 °C oder darunter durchgeführt wird.

13. Das Verfahren nach einem der vorstehenden Ansprüche, wobei das Peroxid-Nassätzen bei einer Temperatur von 10 °C oder darunter durchgeführt wird.

14. Das Verfahren nach einem der vorstehenden Ansprüche, wobei das Peroxid-Nassätzen bei einem pH-Wert von 4 bis 8 durchgeführt wird.

15. Ein Teileset zum Ausführen des Verfahrens nach einem der Ansprüche 1-14, umfassend:
a)- ein Zwischenprodukt (100) der Herstellung eines Feldeffekttransistor-Sensors, welches umfasst:
i.- einen Substratbereich (210), der ein Gate-Dielektrikum (211) und gegebenenfalls einen Nanohohlraum (212) umfasst,
ii.- einen Sensorhohlraum (300) über dem Substratbereich (210), wobei der Sensorhohlraum (300) mit einem Opferelement (310) zum Schützen des Substratbereichs (210) gefüllt ist,
iii.- eine oder mehrere Schichten (400) über dem Opferelement (310), und einen in der einen oder den mehreren Schichten (400) geöffneten Zugang (500), der mindestens einen Teil des Opferelements (310) freilegt;
iv.- ein freiliegendes Material, ausgewählt aus Al, Al₂O₃, Ti und TiₓO_{y},
wobei das Teileset weiter umfasst
b)- ein Peroxid mit einer Temperatur von 40 °C oder darunter zum selektiven Entfernen des Opferelements (310),
wobei die eine oder die mehreren Schichten (400) eine kombinierte Dicke von mindestens 100 nm aufweisen und das Opferelement (310) durch ein Nassätzen auf Peroxidbasis unter Verwendung des Peroxids, wie unter Punkt b) definiert, entfernt werden kann.

## Revendications

1. Un procédé de formation d'un capteur à transistor à effet de champ, le procédé comprenant :
a. la fourniture d'un substrat ayant une région de substrat (210) comprenant un diélectrique de grille (211) et éventuellement une nanocavité (212),
b. la fourniture d'un élément sacrificiel (310) sur la région de substrat (210),
c. la fourniture d'une ou plusieurs couches (400) sur l'élément sacrificiel (310),
d. l'ouverture d'un accès (500) à l'élément sacrificiel (310) à travers la ou les couches (400), et
e. l'élimination sélective de l'élément sacrificiel (310), ouvrant ainsi une cavité de capteur (300) sur la région de substrat (210),
**caractérisé en ce que** l'élément sacrificiel (310) fourni à l'étape b est amovible par gravure humide à base de peroxyde à une température de 40°C ou moins, la ou les couches (400) ont une épaisseur combinée d'au moins 100 nm sur l'élément sacrificiel (310), et l'élément sacrificiel (310) est éliminé à l'étape e par gravure humide à base de peroxyde à une température de 40°C ou moins,
en outre **caractérisé en ce que** lors de l'étape e, un intermédiaire (100) obtenu après l'étape d comprend un matériau exposé sélectionné parmi Al, Al2O3, Ti et TixOy et dans lequel l'étape e est réalisée de manière sélective par rapport audit matériau.

2. Le procédé selon la revendication 1, dans lequel l'élément sacrificiel (310) comprend un métal.

3. Le procédé selon la revendication 2, dans lequel le métal est sélectionné parmi TiN, W et TaN.

4. Le procédé selon l'une quelconque des revendications précédentes, dans lequel l'étape d'ouverture d'un accès (500) à l'élément sacrificiel (310) à travers la ou les couches (400) a une épaisseur combinée d'au moins 500 nm, de préférence d'au moins 1 µm.

5. Le procédé selon l'une quelconque des revendications 1 à 4, dans lequel l'étape d comprend l'utilisation d'un masque (600) et dans lequel le masque (600) est amovible par la même élimination sélective que l'élément sacrificiel (310).

6. Le procédé selon l'une quelconque des revendications 1 à 5, dans lequel
- le procédé comprend une étape supplémentaire b', après l'étape b et avant l'étape c, consistant à fournir un autre élément sacrificiel (320) sur l'élément sacrificiel (310), et
- l'étape c ou l'étape d comprend l'élimination sélective de l'autre élément sacrificiel (320).

7. Le procédé selon la revendication 6, dans lequel un canal fluidique (700) est formé dans l'intermédiaire (100) par élimination sélective de l'autre élément sacrificiel (320).

8. Le procédé selon l'une quelconque des revendications précédentes, dans lequel la cavité de capteur (300) a sa plus petite dimension latérale mesurant au maximum 100 nm et dans lequel l'accès (500) a une dimension, dans la direction de la plus petite dimension latérale de la cavité de capteur (300), plus grande que la plus petite dimension latérale de la cavité de capteur (300).

9. Le procédé selon l'une quelconque des revendications précédentes, comprenant en outre une étape d'apport d'électrodes de liaison Al, l'intermédiaire (100) obtenu après l'étape d'apport comprenant des électrodes de liaison Al exposées et dans lequel l'étape e est réalisée en présence desdites électrodes de liaison Al exposées.

10. Le procédé selon l'une quelconque des revendications précédentes, dans lequel la gravure humide à base de peroxyde est réalisée avec une solution de peroxyde comprenant de 5 à 25 % en poids de peroxyde.

11. Le procédé selon l'une quelconque des revendications précédentes, dans lequel la gravure humide à base de peroxyde est réalisée avec une solution de peroxyde comprenant de 10 à 20 % en poids de peroxyde.

12. Le procédé selon l'une quelconque des revendications précédentes, dans lequel la gravure humide à base de peroxyde est réalisée à une température de 25°C ou moins.

13. Le procédé selon l'une quelconque des revendications précédentes, dans lequel la gravure humide à base de peroxyde est réalisée à une température de 10°C ou moins.

14. Le procédé selon l'une quelconque des revendications précédentes, dans lequel la gravure humide à base de peroxyde est réalisée à un pH de 4 à 8.

15. Un kit de pièces pour la mise en œuvre du procédé selon l'une quelconque des revendications 1 à 14, comprenant :
a) un intermédiaire (100) dans la fabrication d'un capteur à transistor à effet de champ, comprenant :
i. une région de substrat (210) comprenant un diélectrique de grille (211) et éventuellement une nanocavité (212),
ii. une cavité de capteur (300) sur la région de substrat (210), la cavité de capteur (300) étant remplie d'un élément sacrificiel (310) pour protéger la région de substrat (210),
iii. une ou plusieurs couches (400) au-dessus de l'élément sacrificiel (310), et
un accès (500) ouvert dans la ou les couches (400), exposant au moins une partie de l'élément sacrificiel (310) ;
iv. un matériau exposé sélectionné parmi Al, Al₂O₃, Ti et TiₓO_{y},
le kit de pièces comprenant en outre
b) un peroxyde à une température de 40°C ou moins pour éliminer sélectivement l'élément sacrificiel (310),
dans lequel la ou les couches (400) ont une épaisseur combinée d'au moins 100 nm et l'élément sacrificiel (310) est amovible par gravure humide à base de peroxyde utilisant le peroxyde tel que défini en point b).
